Europäisches Patentamt

European Patent Office

Office européen des brevets

(11) Publication number: 0 199 104

A2

# EUROPEAN PATENT APPLICATION

(21) Application number: 86103871.9

(22) Date of filing: 21.03.86

(51) Int. Cl.⁴: C01B 17/96 , C01D 5/00

(30) Priority: 27.03.85 CA 477619

(43) Date of publication of application:
29.10.86 Bulletin 86/44

(84) Designated Contracting States:
BE DE FR GB IT NL SE

(71) Applicant: Phinney, Robin
2777 Eastview
Saskatoon Saskatchewan S7J 3H3(CA)

(72) Inventor: Phinney, Robin
2777 Eastview
Saskatoon Saskatchewan S7J 3H3(CA)

(74) Representative: Hoeger, Stellrecht & Partner
Uhlandstrasse 14c
D-7000 Stuttgart 1(DE)

(54) The production of potassium sulphate.

(57) This invention relates especially to the production of potassium sulphate which is used primarily as a specialty fertilizer. The process presented here uses ion exchange to combine soluble sulphates such as sodium sulphate with potassium chloride to produce a low chloride ion containing potassium sulphate product which is desirable for agricultural and industrial markets. In particular, in the preferred mode of ion exchange, an anion exchange resin is loaded with sulphate ion using sodium sulphate. The sulphate laden resin is then treated with potassium chloride brine from a recycle stream. The exit brine containing potassium sulphate and potassium chloride is treated with potassium chloride to salt out the bulk of the potassium sulphate which is then separated or filtered off. The mother liquor which is rich in potassium chloride is available for another production cycle. In the regeneration cycle, the exit regeneration brine containing sodium chloride and sodium sulphate is treated with solid sodium chloride to salt out the sodium sulphate for separation and recyle to the regeneration step. Dilute sulphate brines can also be used for regeneration.

FIG. I

VOLUME OF SOLUTION - 6.5 l    PRODUCTION; 160 g/l KCl
AT BEGINNING AND END   14 l    REGENERATING; 150 g/l Na₂SO₄    END pH = 9.0

# THE PRODUCTION OF POTASSIUM SULPHATE

This invention relates generally to the production of metal sulphates, and more particularly, to the production of potassium sulphate, by an ion exchange process.

Potassium sulphate is a well known potassium source used primarily for crops such as tobacco and citrus which are detrimentally affected by the chloride ion in potassium chloride. The latter is a naturally occurring material while potassium sulphate must be manufactured from potassium chloride and a sulphate source. Potassium sulphate is therefore a considerably more expensive source of $K_2O$ than potassium chloride. The market for potassium sulphate is small because of its high cost compared to potassium chloride. However if it was possible to decrease manufacturing costs significantly (capital and/or operating costs), potassium sulphate usage would increase significantly partly because it is chloride free and partly because it is an excellent source of sulphur which is the fourth major plant nutrient.

While the patent and open literature contain numerous methods of production of potassium sulphate (Noyes, Potash and Potash Fertilizers ,1966) few references to ion exchange production have been found. These include:

(a) U.S.A. Patent No. 3,096,153, July 2, 1963 whereby calcium sulphate feedstock is used with cation exchange.

(b) UZb. Khim Zh, 13, 15 (1969) using magnesium sulphate and potassium chloride feedstock to produce potassium sulphate in a process which utilizes cation exchange.

(c) UZb. Khim Zh , 17 (4), 13 (1973) and UZb. Khim Zh, 17 (5) (1973) whereby sylvinite (KCl + NaCl) is first run through the sulphate form of an anion exchange resin and then through a potassium laden cation exchange bed to transform $Na_2SO_4$ to $K_2SO_4$.

As will be seen in this patent, the feedstocks and process are materially distinct both in resin selection and treatment of ion exchange exit brines.

There are two principal routes commercially used for the manufacture of potassium sulphate. One route is the so-called Mannheim process where potassium chloride is acidulated with sulphuric acid to produce potassium sulphate and hydrogen chloride (Phosphorus and Potassium, No. 106 Mar/April p. 24, 1980). This process route requires an extensive capital investment in plant and equipment in addition to the difficulties associated with marketing co-product hydrogen chloride.

The other major process route involves slurry based process chemistry whereby sulphate bearing ores such as langbeinite or complex sulphate lake brines are reacted with KCl. These neutral salt routes which avoid production of hydrogen chloride can be desirable for a stand alone plant.

With neutral salts however the phase diagrams (Brad Gunn, Can.J. Chem. Eng., August, 1965, p.193, and U.S. Patent No. 3,369,867 of Feb. 20, 1968 for example) are frequently complex due to intermediate phases which require extensive recycle streams to obtain the product in good yield. These complexities add to equipment and processing costs and in an overall sense these plants may be no more cost effective than the Mannheim process.

The process of the present invention circumvents the problem of intermediate salts and phases by taking the reaction pathway through a new route via a resin-ion intermediate which can be formed and decomposed to product with proper feedstock and resin selection.

The present invention resides, broadly, in an ion exchange process for producing metal sulphates wherein an ion exchange process is used to provide an exit brine comprising a metal sulphate and a metal chloride and wherein said exit brine is treated with additional metal chloride to salt out the metal sulphate which is then separated.

More particularly, the present invention resides in an ion exchange process for producing potassium sulphate from sodium sulphate and potassium chloride, comprising:

(1) bringing an aqueous solution of a soluble sulphate into contact with an anion exchange resin to load said anion exchange resin with sulphate ion;

(2) bringing an aqueous solution of potassium chloride into contact with the anion exchange resin that has been loaded with sulphate ion to form an exit brine solution of predominantly potassium sulphate and normally including some potassium chloride;

(3) adding potassium chloride to the exit brine of step (2) to salt out potassium sulphate; and

(4) separating the potassium sulphate salted out in step (3) from a residual liquor rich in potassium chloride.

The chemical data base for the ion exchange process is presented in Figure I and Table I. The overall reaction is:

(1) $2KCl + Na_2SO_4 \rightarrow K_2SO_4 + 2NaCl$

or (2) $R\text{-}SO_4 + 2KCl \rightarrow K_2SO_4 + R\text{-}Cl_2$

Production Step

(3) $R\text{-}Cl_2 + Na_2SO_4 \rightarrow R\text{-}SO_4 + 2NaCl$

Regeneration Step where R is an anion exchange resin in this case.

The preferred mode of ion exchange is anion exchange since at the optimum temperatures for the process, the solubility of the sulphate anion is the lesser of the two starting materials. Using anion exchange thereby minimizes the overall circuit volumes leading to a high yield process. Another important reason is the favourable nature of the exit brine in anion exchange whereby KCl is used to salt out potassium sulphate and this has a simpler phase diagram from a process perspective than separating sodium and potassium sulphate. Of course this does not preclude using cation exchange since the same salting out principles can be used to treat exit brines from cation exchange as from anion exchange. The process may be carried out at temperatures in the range of from 0°C -88°C (32° -190°F); however preferred operating temperatures are in the range of 65°C -71°C - (150° -160°F).

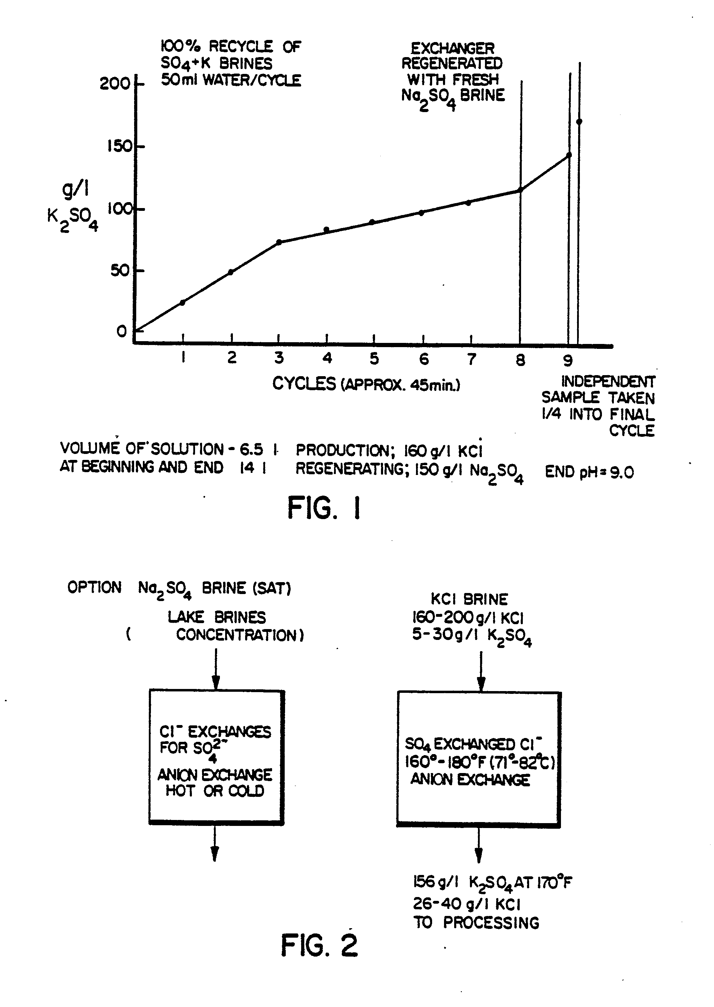

The data in Figure 1 is for a closed cycle experiment on the production side of the process whereby the sulphate laden resin is treated with 14 litres of solution containing 160 g/l of potassium chloride. In cycles one through three, the yield of potassium sulphate is approximately 24 g/l which is the theoretical amount for the particular strongly basic anion exchange resin utilized. As results in Table I indicate, the $SO_4^{2-}$ content of the brine increases and the $Cl^-$ content decreases.

## TABLE I

### TABLE OF RESULTS

ASSAYS (%)
(g/100 g of SOL)

|  | $SO_4$ | K | Cl | Na |
|---|---|---|---|---|
| Cycle 2 | 2.31 | 7.31 | 4.64 | -- |
| Cycle 3 | 3.43 | 6.72 | 3.61 | 0.03 |
| Cycle 4 | 4.00 | 6.64 | 3.34 | 0.18 |
| Cycle 5 | 4.17 | 6.71 | 3.37 | 0.24 |
| Cycle 6 | 4.69 | 6.53 | 2.99 | 0.35 |
| Cycle 7 | 4.99 | 6.51 | 2.95 | 0.47 |
| Cycle 8 | 5.56 | 6.13 | 2.47 | 0.66 |
| Bulk Sample at End | 6.90 | 5.68 | 1.36 | 0.85 |
| *2 litres through final cycle | 8.29 | 5.48 | 0.21 | 0.88 |
| Brine after $K_2SO_4$ Precipitation | 2.49 | 8.20 | 6.01 | 0.27 |

* This indicates that the sulphate in the exit brine from the exchanger could be higher than 90% of the contained salts when the circuit is optimized.

The K₂SO₄ precipitate assays were:

K = 44.84

SO₄ = 55.13

Cl = 0.05

Na = Not Detected

Through the above production cycles a closed circuit regeneration solution of 150 g/l of sodium sulphate was used and this resulted in sodium chloride formation. At the end of cycle 3, sodium chloride concentration became significant enough to curtail the efficiency of the production cycle. The saturation limit for sodium chloride for a typical strong base resin is 41 g/l while that for a weak base resin is about 75 g/l indicating that a weakly basic resin is the preferred anion exchange resin from a yield perspective for this process. The reason for this preference is that the resin tolerates more chloride ion in the exit brine while still performing efficiently. However operating circumstances may dictate the use of a strong base resin since such resins are known to be more durable with respect to osmotic shock.

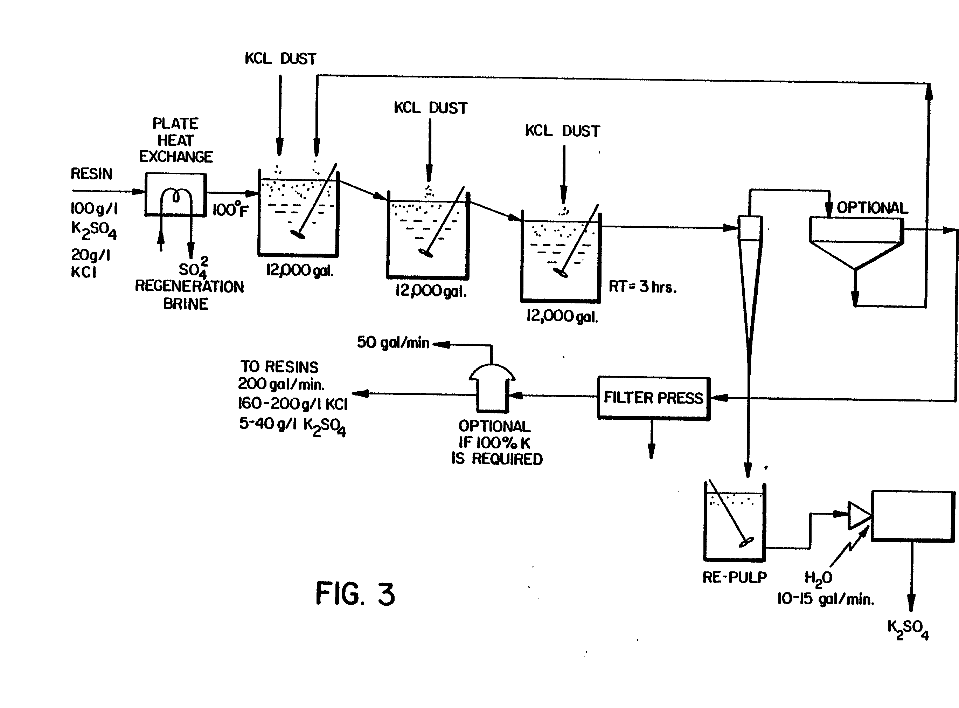

The process flowsheets are shown in Figures 2 and 3. Figure 2 indicates a standard fixed bed type ion exchange unit with preferred operating conditions although ambient conditions can be used at somewhat lower overall efficiencies.

A pulsed bed ion exchange system such as a Higgins unit or a continuous ion exchange system such as the Aconex unit (Encyclopedia of Chemical Technology, 2nd Edition, 1967) can be used with a continuous system being the most cost effective in terms of resin efficiency and is therefore preferred.

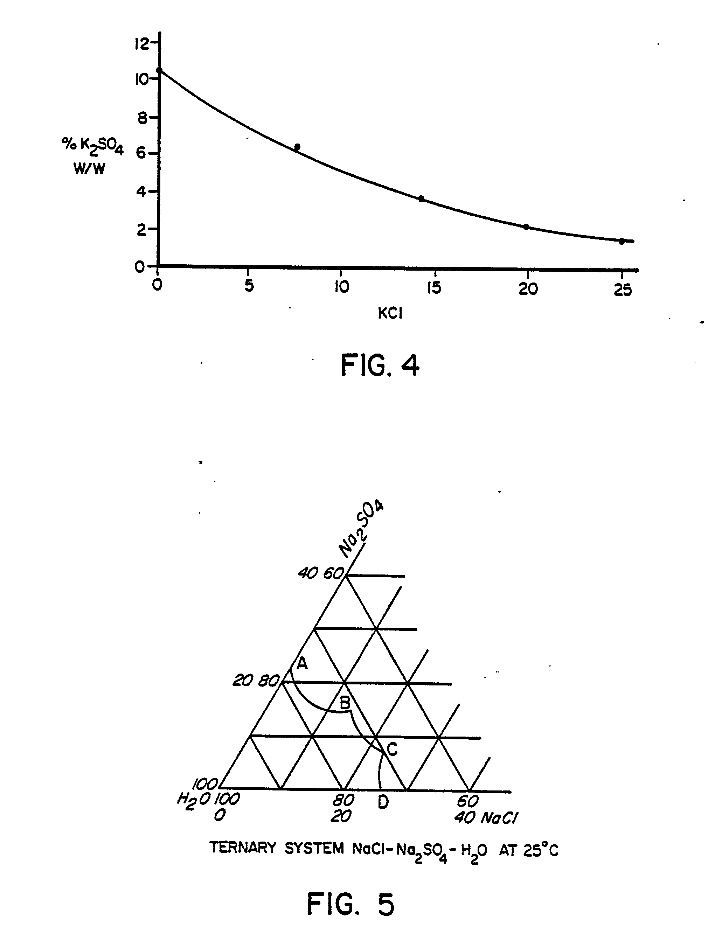

Figure 3 indicates the preferred process configuration after the exit of the brine from the production cycle. In the first step, a heat exchanger picks up residual heat for subsequent use in heating the recycle stream to the production side. After the heat exchanger, KCl dust or brine is added in a stepwise manner to the exit brine to salt out the potassium sulphate from the production brine. Those skilled in the art will recognize that the potassium sulphate can be made to salt out to a high degree upon addition of KCl to a brine containing potassium sulphate. (See Figure 4).

During the addition of KCl, recycle of the slurry containing potassium sulphate can effect the crystallization of potassium sulphate crystals of a size that is suitable and desirable for use in bulk blended fertilizers.

After potassium chloride addition there is a solid liquid separation with the liquid going to a thickener and the overlow going to a filter press for recovery of solids. This is used for high efficiency solids recovery. Alternatively, after a solid-liquid separation, the slurry containing the product is sent to repulp where water is added or at the centrifuge for product quality control.

If higher potassium and sulphate recoveries are desired, (95% to 98%), (a) the overflow from the thickener can be evaporated without precipitation of contained salt before the brine proceeds to the resin for the production step, or (b) the brine exiting the ion exchange step can be evaporated with or without precipitation of potassium sulphate in order to maintain circuit volume. The only evaporation required is to compensate for wash water addition and grade control on the centrifuge. This minimal amount of evaporation will give control of the circuit volume and ensure the stated high recovery of potassium and sulphate.

On the regeneration side, the exit brine is treated with sodium chloride and it is apparent to those skilled in the art that the phase diagram of sodium sulphate and sodium chloride indicates that solid sodium sulphate will be salted out by the addition of sodium chloride and the sodium sulphate recovered and recycled for regeneration (see Figure 5). After an initial charge of sodium chloride, the latter could be recovered if needed from solar evaporation ponds since the reaction produces sodium chloride.

As apparent to those skilled in the art, a variety of soluble sulphates including magnesium sulphate and ammonium sulphate can be used as a feedstock for this ion exchange process. Any sulphate salt with low solubility such as gypsum can also be used since the sulphate is concentrated on an anion exchange resin. The limit is determined only by the chloride ion tolerance which for a weak base anion exchange resin can be in the range of 70 g/litre of chloride salt. A strong base anion exchange resin can be used but that chloride tolerance is of the order of 40 g/litre of chloride salt.

In addition a range of dilute sulphate brines can be used as sulphate sources without sulphate recovery since the efficiency of conversion of the chloride form of the anion resin to the sulphate form increases as the sulphate source becomes more dilute. See Table II.

## Table II

| $Na_2SO_4$ in Feedstock, g/l | % Sulphate Recovery of Resin Loaded to 50% of Capacity |
|---|---|
| 200.0 | 17.6 |
| 50.0 | 40.7 |
| 25.0 | 56.0 |

As seen from Table II, the more dilute the sulphate source the more efficient the sulphate recovery and hence dilute sulphate brines can be used effectively. While the data in Table II is for a strong base anion exchange resin, the preferred resin could be a weak base anion exchange resin due to higher chloride ion tolerance which would become important as chloride levels build up or exist in a natural sulphate brine source.

Both methods or schemes of regeneration are particularly suited to the contiguous deposits of potash and sulphate lakes in the Province of Saskatchewan, Canada. In the case of solid deposits of sodium and magnesium sulphates, these can be transported to potash mines and solid sodium chloride tailings can be used to recover soluble sulphate removing the need to recover sodium chloride produced during the process using solar evaporation ponds. In the case of dilute lake brines such as Big Quill Lake, an efficient continuous ion exchange device would enable the direct use of the dilute sulphate brines as shown in Table III.

## Table III

| Ion | Concentration, g/l |
|---|---|
| $SO_4^{2-}$ | 25.01 |
| $Cl$ | 3.73 |
| $Na^+$ | 6.53 |
| $Mg^{2+}$ | 3.90 |
| $Ca^{2+}$ | 0.20 |
| $K^+$ | 0.44 |

A pilot plant with capacity of 10 kg/hr. was set up using continuous bed ion exchange technology with a weak base resin (resin in the acidic form). The results, scaled to lt/hr., are shown in Table IV.

The data in Table IV represents room temperature operation using a white, refined grade of potassium chloride as feedstock. The $K_2O$ content of the product ranged between 53.6% and 54.0%. The $K_2O$ recovery was 91.3%.

At recommended operating temperatures of 160°F -180°F (71°C -82°C) the increased (1.2 Meq. vs. 0.6 Meq.) capacity or "bite" or the resin should allow fuller utilization of resin capacity - (based on laboratory tests) such that the $K_2O$ recovery goes to 97% and the evaporative load drops down to 0.5 -0.6 t of $H_2O$ per t of $K_2SO_4$.

There are other marketable metal sulphate commodities such as sodium sulphate which can be produced using this described technology.

A strongly basic anion exchange resin having quaternary ammonium functionality, "Amberlite IRA-910" Trademark of the Rohm and Haas Company for a gel-type strongly basic anion exchange resin having a styrene-divinylbenzene crosslinked matrix structure and dimethyl ethanolamine functionality., was loaded to the sulphate form and treated with NaCl regenerant. The results are shown in Table IV.

## Table IV

| Cumulative Effluent, ml, | Wt% $Cl^-$ | Wt% $SO_4^-$ | % Resin Loaded to $Cl^-$ |
|---|---|---|---|
| 1.3 | 0 | 20.55 | 0.88 |
| 5.8 | 0.11 | 20.34 | 4.02 |
| 13.8 | 0.12 | 20.35 | 9.56 |
| 24.4 | 0.06 | 20.44 | 16.87 |
| 36.4 | 0.06 | 20.44 | 25.24 |
| 50.1 | 0.04 | 20.48 | 34.69 |
| 64.5 | 0.28 | 20.16 | 44.61 |
| 79.6 | 1.60 | 18.36 | 53.94 |
| 96.1 | 5.37 | 13.25 | 61.63 |
| 114.2 | 8.78 | 8.65 | 66.68 |
| 133.3 | 10.89 | 5.77 | 70.43 |
| 153.3 | 12.01 | 4.27 | 73.34 |

The exit brine can be treated with a salting out agent such as sodium chloride and the sodium sulphate can be made to salt out of solution.

The present invention as described herein provides an environmentally clean and cost effective process for the production of metallic sulphates from metallic chlorides and soluble sulphates.

## Claims

1. An ion exchange process for producing metal sulphates wherein an ion exchange process is used to provide an exit brine comprising a metal sulphate and a metal chloride and wherein said exit brine is treated with additional metal chloride to salt out the metal sulphate which is then separated.

2. A process as in claim 1 wherein the metal chloride is an alkali metal chloride.

3. A process as in claim 1 wherein the metal chloride is an alkaline earth metal chloride.

4. A process as in claim 1 in which the exit brine comprises potassium sulphate and potassium chloride and in which additional potassium chloride is added to salt out potassium sulphate.

5. A process as in claim 1 in which the ion exchange process includes a regeneration cycle the exit brine of which contains sodium chloride and sodium sulphate and in which said exit brine of the regeneration cycle is treated with metal chloride to salt out sodium sulphate.

6. A process as in claim 5 wherein the metal chloride is sodium chloride or magnesium chloride.

7. An ion exchange process for producing potassium sulphate from sodium sulphate and potassium chloride, comprising:

(1) bringing an aqueous solution of a soluble sulphate into contact with an anion exchange resin to load said anion exchange resin with sulphate ion;

(2) bringing an aqueous solution of potassium chloride into contact with the anion exchange resin that has been loaded with sulphate ion to form an exit brine solution of predominantly potassium sulphate and normally including some potassium chloride;

(3) adding potassium chloride to the exit brine of step (2) to salt out potassium sulphate; and

(4) separating the potassium sulphate salted out in step (3) from a residual liquor rich in potassium chloride.

8. A process as in claim 7 wherein the anion exchange resin is in the acid form.

9. A process as in claim 7 wherein the anion exchange resin is in the quaternary ammonium form.

10. A process as in claim 7 in which the residual liquor rich in potassium chloride of step (4) is recycled for use as a feedstock in at least one of steps (2) and (3).

11. A process as in claim 7 which includes also a regeneration step which results in an exit regeneration brine containing sodium chloride and sodium sulphate which is treated with sodium chloride to salt out sodium sulphate.

12. A process as in claim 11 in which the sodium sulphate which is salted out is recycled for use in providing the solution of soluble sulphate in step (1).

13. The process of claim 7 in which step (2) is carried out at a temperature in the range of from 0°C to 88°C.

14. The process of claim 7 in which step (2) is carried out at a temperature in the range of from 65°C to 71°C.

15. The process of claim 7 wherein the soluble sulphate is sodium sulphate.

16. The process of claim 7 wherein the soluble sulphate is magnesium sulphate.

17. The process of claim 7 wherein the soluble sulphate is ammonium sulphate.

18. A process as in claim 7 wherein the aqueous solution of a soluble sulphate is a dilute sulphate brine.

19. A process as in claim 7 wherein the sulphate used is gypsum (calcium sulphate).

100% RECYCLE OF
SO$_4$+K BRINES
50 ml WATER/CYCLE

EXCHANGER
REGENERATED
WITH FRESH
Na$_2$SO$_4$ BRINE

200

150

g/l
K$_2$SO$_4$

100

50

0

1   2   3   4   5   6   7   8   9

CYCLES (APPROX. 45 min.)

INDEPENDENT
SAMPLE TAKEN
1/4 INTO FINAL
CYCLE

VOLUME OF SOLUTION - 6.5 l    PRODUCTION; 160 g/l KCl
AT BEGINNING AND END   14 l    REGENERATING; 150 g/l Na$_2$SO$_4$    END pH = 9.0

FIG. 1

OPTION   Na$_2$SO$_4$ BRINE (SAT)

LAKE BRINES
(        CONCENTRATION)

KCl BRINE
160-200 g/l KCl
5-30 g/l K$_2$SO$_4$

Cl$^-$ EXCHANGES
FOR SO$_4^{2-}$

ANION EXCHANGE
HOT OR COLD

SO$_4$ EXCHANGED Cl$^-$
160°-180°F (71°-82°C)
ANION EXCHANGE

156 g/l K$_2$SO$_4$ AT 170°F
26-40 g/l KCl
TO PROCESSING

FIG. 2

FIG. 3

FIG. 4

TERNARY SYSTEM NaCl-Na$_2$SO$_4$-H$_2$O AT 25°C

FIG. 5